# FASCICULE DE BREVET EUROPEEN

(11) **EP 3 216 373 B1**
(45) Date de publication et mention de la délivrance du brevet: **19.09.2018**
(21) Numéro de dépôt: 17158255.4
(22) Date de dépôt: 27.02.2017
(51) Int. Cl.: A47J 27/21

(54) **BOUILLOIRE COMPACTE MUNIE D'UNE PAROI COURBE**
KOMPAKTER KOCHTOPF MIT GEKRÜMMTER WAND
COMPACT KETTLE WITH CURVED WALL

(30) Priorité: 01.03.2016 FR 1651721
(43) Date de publication de la demande: 13.09.2017
(73) Titulaire: SEB S.A., 69130 Ecully (FR)
(72) Inventeur: TURPIN, Angéline, 21000 DIJON (FR)
(74) Mandataire: Bourrières, Patrice

(56) Documents cités:
- WO-A1-2004/073466
- WO-A1-2005/020767
- GB-A- 2 430 138
- GB-A- 2 496 404

## Description

La présente invention concerne un appareil de chauffage de liquides, notamment une bouilloire électrique, comportant un corps formant un récipient de réception de l'eau, un fond chauffant électrique et un dispositif de détection de l'ébullition

On connait par exemple du brevet EP0786221, une bouilloire comprenant un corps agencé au-dessus d'un fond chauffant électrique et un conduit vapeur destiné à convoyer la vapeur dégagée lors de l'ébullition d'une partie supérieure dudit corps vers un capteur de détection de vapeur, ledit conduit de vapeur comportant une ouverture d'entrée agencée sur un bord interne du corps, au-dessus d'un niveau de remplissage maximum en eau du corps.

Dans une telle bouilloire, lors de la chauffe, il se crée des flux ascendants d'eau et de vapeur qui vont créer à la surface libre de l'eau des remous et des projections de plus en plus importants, à mesure que l'on s'approche de l'ébullition. Pour éviter que les projections d'eau pénètrent par l'ouverture d'entrée dans le conduit vapeur et dégradent le capteur de détection vapeur, on limite le volume utile de la bouilloire par un niveau de remplissage maximum qui laisse un volume d'air important au-dessus de la surface libre de l'eau. Le volume d'air peut représenter jusqu'à 40% du volume total de la bouilloire. Ainsi, la distance entre l'ouverture du conduit vapeur et la surface de l'eau au niveau de remplissage maximum est suffisante pour que les projections ne pénètrent pas dans le conduit vapeur.

En conséquence, pour un volume utile de chauffe donné, le volume total de la bouilloire est important et un utilisateur peut rencontrer des difficultés pour lui trouver une place pour l'utiliser ou la ranger. De plus, le conditionnement de la bouilloire est volumineux et le cout de l'acheminement de la bouilloire de l'usine de production vers l'utilisateur est élevé.

On connait également du brevet GB2496404, une bouilloire comprenant un corps agencé au-dessus d'un fond chauffant électrique et un conduit vapeur destiné à convoyer la vapeur dégagée lors de l'ébullition vers un capteur de détection de vapeur, le conduit de vapeur comportant une ouverture d'entrée agencée sur un bord interne du corps. La bouilloire comporte un dispositif de protection contre l'intrusion de l'eau dans le conduit vapeur lors de l'ébullition qui comprend une paroi s'étendant depuis le fond chauffant vers l'intérieur du corps, sous l'ouverture d'entrée. La paroi s'étend de manière majoritairement transversale aux flux ascendants d'eau et de vapeur, pour, au moins partiellement bloquer et/ou dévier les flux ascendants d'eau et de vapeur lors de l'ébullition.

Cependant, la paroi ne bloque pas les flux ascendants d'eau et de vapeur qui progressent depuis le fond chauffant le long du bord interne. Ainsi, pour éviter que les projections d'eau générées par ces flux ne pénètrent par l'ouverture d'entrée dans le conduit vapeur et dégradent le capteur de détection vapeur, on limite comme dans le cas précédent le volume utile de la bouilloire.

Un but de la présente invention est de remédier aux inconvénients précités et de proposer une bouilloire compacte, qui présente un ratio volume utile sur le volume total optimisé.

Un autre but de la présente invention est de proposer une bouilloire qui présente une conception simple et qui soit économique à mettre en oeuvre.

Ces buts sont atteints avec une bouilloire comprenant les caractéristiques de la revendication 1.

Ainsi, la paroi s'étend dans l'eau, depuis le bord interne, de manière transversale aux flux ascendants d'eau et de vapeur, avec une forme plongeante pour, au moins partiellement, bloquer et dévier les flux ascendants d'eau et de vapeur lors de l'ébullition et ainsi les écarter de l'ouverture d'entrée.

Un tel agencement permet, lors de l'ébullition, de réduire les turbulences de la surface de l'eau et de limiter l'amplitude des projections aux abords de l'ouverture d'entrée du conduit vapeur. Ainsi, la distance entre l'ouverture du conduit vapeur et la surface de l'eau au niveau de remplissage maximum peut être faible, sans risque d'intrusion d'eau dans le conduit vapeur pour permettre d'obtenir un volume d'air limité au-dessus de la surface libre de l'eau. En conséquence, la bouilloire peut être plus compacte, notamment en hauteur.

Par niveau de remplissage maximum, on comprend le niveau d'eau maximum matérialisé sur le corps de la bouilloire pour l'utilisateur.

Avantageusement, la paroi s'étend depuis le bord interne selon une ligne contenue dans un plan horizontal.

Ainsi, la paroi commence à s'étendre perpendiculairement aux flux ascendants.

Avantageusement, la ligne est contenue dans le plan horizontal correspondant au niveau de remplissage maximum.

Cette disposition permet de bloquer et dévier les flux ascendants d'eau et de vapeur dans une partie haute de la bouilloire, lorsqu'elle est proche de son remplissage maximum.

De préférence, la paroi présente une extrémité libre et dans un plan de coupe vertical, transversal au bord interne, l'extrémité libre est orientée vers le bord interne pour définir une ouverture entre le bord interne et l'extrémité libre.

Ainsi, les flux ascendants circulant à proximité du bord interne passent par l'ouverture et sont entrainés dans un régime tourbillonnaire en rencontrant la paroi courbe. Un tel régime tourbillonnaire permet de dissiper une partie de l'énergie des flux ascendants. De plus, une partie des flux ascendants est déviée vers l'avant, à l'opposé du bord interne, par une face externe de la paroi courbe pour créer une zone calme à la surface de l'eau à l'avant de la paroi.

Avantageusement, la paroi présente une extrémité libre et dans un plan de coupe vertical, transversal au bord interne, l'extrémité libre est située à égale distance du bord interne.

Ainsi, l'ouverture entre l'extrémité libre et le bord interne est régulière pour créer à l'avant de la paroi, à l'opposé du bord interne, une zone équilibrée et symétrique de réduction des turbulences de la surface de l'eau et de limitation de l'amplitude des projections.

De préférence, la paroi présente dans un plan de coupe vertical, transversal au bord interne une forme circulaire munie d'une ouverture.

Une telle forme circulaire est particulièrement apte à générer un régime tourbillonnaire des flux ascendants entrant par l'ouverture.

Avantageusement, dans un plan de coupe vertical, transversal au bord interne, la paroi s'étend davantage verticalement au bord interne que radialement.

Ainsi, la paroi qui s'étend majoritairement vers le bas favorise la déviation d'une partie des flux ascendants vers l'avant, à l'opposé du bord interne, par une face externe de la paroi courbe pour créer une zone calme à la surface de l'eau à l'avant de la paroi.

De préférence, le corps présente une section transversale circulaire de rayon R et la paroi s'inscrit dans un secteur angulaire formé par deux rayons R et un arc de cercle, l'ouverture d'entrée étant agencée à proximité du milieu de l'arc de cercle.

Ainsi, les flux ascendants bloqués par la paroi vont être dirigés majoritairement de part et d'autre du secteur angulaire, tangentiellement au bord interne. L'ouverture d'entrée est entourée par une zone équilibrée et symétrique de réduction des turbulences de la surface de l'eau et de limitation de l'amplitude des projections.

Avantageusement, la paroi comporte des perforations, notamment oblongues.

Ainsi, les perforations permettent le passage d'une partie des flux ascendants, notamment de vapeur, qui pourrait se trouver bloquée sous la paroi. Le passage de l'eau et de la vapeur dans les perforations crée des turbulences tourbillonnaires qui dissipent une partie de l'énergie des flux ascendants.

De préférence, la bouilloire comporte un couvercle et la paroi est agencée sous le couvercle.

Ainsi, la paroi et le couvercle sont deux pièces distinctes. En conséquence, la paroi est dissociée du couvercle, permettant d'avoir un couvercle peu encombrant et facile à manipuler.

De préférence, la bouilloire comporte un bec verseur agencé de manière diamétralement opposée à l'ouverture d'entrée et la paroi dévie les flux ascendants d'eau et de vapeur lors de l'ébullition vers le bec verseur.

Avantageusement, le corps comporte une ouverture traversante vers le bec verseur et l'ouverture traversante est agencée sous la surface de l'eau au niveau de remplissage maximum.

Ainsi, au niveau de remplissage maximum, l'eau présente dans l'ouverture empêche les projections d'eau de sortir par le bec.

L'invention sera mieux comprise à l'étude des modes de réalisation pris à titre nullement limitatif et illustrés dans les figures annexées dans lesquelles :
- La figure 1 illustre une vue en perspective d'une bouilloire comportant un dispositif de protection contre l'intrusion de l'eau dans un conduit vapeur lors de l'ébullition selon un mode particulier de réalisation de l'invention.
- La figure 2 illustre une vue de coté de la bouilloire illustrée sur la figure 1.
- La figure 3 illustre une vue en perspective de la bouilloire sans le corps illustrée sur la figure 1.
- La figure 4 illustre une vue en perspective de la bouilloire sans le corps illustrée sur la figure 1, la bouilloire comportant un dispositif de protection contre l'intrusion de l'eau dans le conduit vapeur lors de l'ébullition de selon un deuxième mode de réalisation de l'invention.

On notera que, dans ce document, les termes «horizontal», «vertical», «inférieur», «supérieur», «haut», «bas», employés pour décrire la bouilloire, font référence à cette bouilloire en situation d'usage, lorsqu'elle est posée sur un plan de travail horizontal.

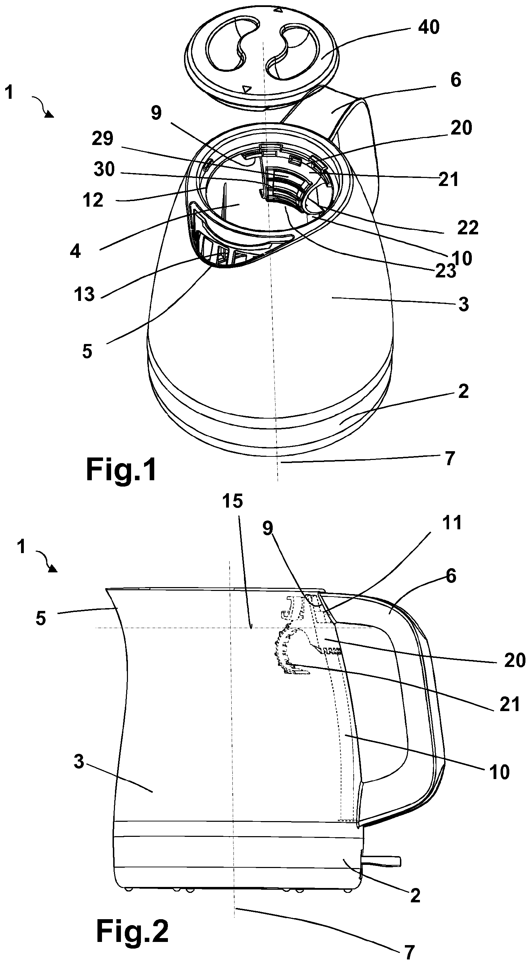

Dans l'exemple de réalisation représenté aux figures 1 à 3, une bouilloire 1 comporte un socle 2 alimenté électriquement par un cordon (non représenté sur les figures) et un corps 3 formant un réceptacle pour l'eau. Le corps 3 comprend une ouverture supérieure 4 de remplissage qui est fermée par un couvercle 40. La bouilloire 1 comprend un bec verseur 5 situé au niveau de l'ouverture supérieure 4 et une poignée 6 située à l'opposé du bec verseur 5 par rapport à l'ouverture supérieure 4. Le corps 3 a une forme sensiblement cylindrique de rayon R et comprend un axe vertical 7. Le couvercle est amovible par rapport au corps 3 et le couvercle est destiné à être assemblé sur le corps 3 selon un mouvement de translation sensiblement parallèle à l'axe vertical 7 du corps 3.

Le socle 2 comporte un fond chauffant 8 formé d'une coupelle en acier inoxydable sous laquelle sont agencés un diffuseur en aluminium et un élément chauffant. La bouilloire 1 comporte un conduit vapeur 10 destiné à convoyer la vapeur dégagée lors de l'ébullition d'une partie supérieure du corps 3 vers un capteur de détection de vapeur (non représenté sur les figures) agencé dans le socle 2. Un afflux de vapeur sur le capteur de détection de vapeur déclenche la coupure de l'alimentation électrique du fond chauffant 8. Le conduit vapeur 10 s'étend verticalement le long d'un bord interne 9 du corps 3 et comporte une ouverture d'entrée 11 qui s'étend dans un plan horizontal et qui est agencée sous un rebord supérieur 12 du corps. Le rebord supérieur 12 est agencé en périphérie supérieure du corps 3 pour former l'ouverture supérieure 4.

La bouilloire 1 comporte un dispositif de protection 20 contre l'intrusion de l'eau dans l'ouverture d'entrée 11 du conduit vapeur 10 lors de l'ébullition. Le dispositif de protection 20 comprend une paroi 21 qui s'étend depuis le bord interne 9 sur lequel est agencé l'ouverture d'entrée 11 vers l'intérieur du corps 3, sous le plan horizontal dans lequel s'étend l'ouverture d'entrée 11. La paroi 21 s'étend depuis le bord interne 9 selon une ligne 24 contenue dans un plan horizontal 15 (Fig.2) défini par la surface de l'eau au niveau de remplissage maximum. La paroi 21 présente dans un plan de coupe vertical, transversal au bord interne 9, une forme de boucle ouverte, courbée vers le bas. La paroi 21 s'étend dans l'eau, sous le plan horizontal 15 défini par la surface de l'eau au niveau de remplissage maximum, de manière transversale aux flux ascendants d'eau et de vapeur.

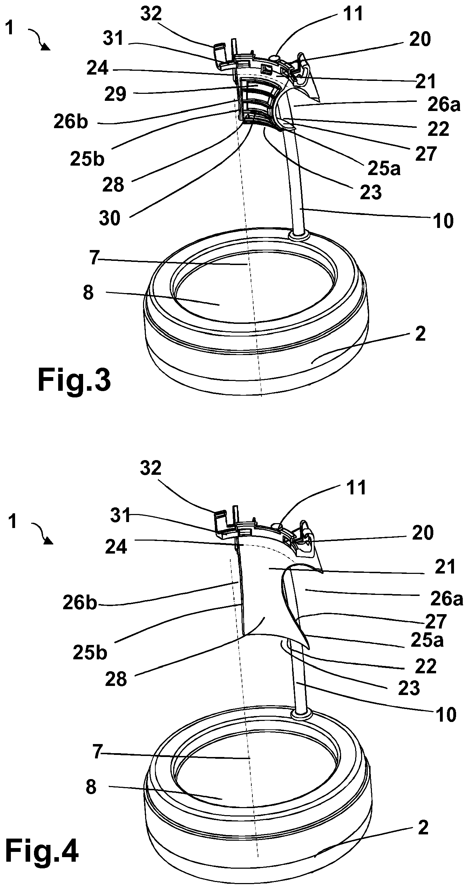

Tel que visible à la figure 3, la paroi 21 présente une extrémité libre 22 et, dans un plan de coupe vertical, transversal au bord interne, l'extrémité libre 22 est orientée vers le bord interne 9 pour définir une ouverture 23 entre le bord interne 9 et l'extrémité libre 22. L'extrémité libre 22 comporte des points qui sont situés à égale distance du bord interne 9 selon une direction radiale au bord interne 9.

D'une manière générale, dans un plan de coupe horizontal, la distance mesurée selon une direction radiale au bord interne 9, entre des points formant un axe passant par le milieu de la section de la paroi 21 et le bord interne 9 est constante. La paroi 21 présente dans un plan de coupe vertical, transversal au bord interne 9 une forme circulaire munie de l'ouverture 23. Ainsi, le dispositif de protection 20 présente une forme générale d'un tube ouvert, cintré selon un arc de cercle centré sur l'axe vertical 7.

La paroi 21 s'inscrit dans un secteur angulaire formé par deux rayons R du corps 3 cylindrique et un arc de cercle, l'ouverture d'entrée 11 étant agencée à proximité du milieu de l'arc de cercle. La paroi 21 présente deux extrémités 25a, 25b latérales appartenant chacune à un plan vertical passant par un rayon R et qui définissent deux ouvertures latérales 26a, 26b.

De manière avantageuse, la paroi 21 présente une surface qui couvre 1/6 de la surface de la section du corps 3 dans un plan horizontal passant par un point d'extension radiale maximum de la paroi 21 par rapport au bord interne 9.

La paroi 21 comporte des perforations 29 oblongues, agencées de manière horizontale et présentant des courbures centrées sur l'axe vertical 7. La paroi 21 comporte une face interne 27 et une face externe 28. La face externe 28 comprend des protubérances 30 linéaires agencées de manière horizontale.

Le dispositif de protection 20 comporte deux extensions latérales 31 munies de crochets de fixation 32 (Fig.3) qui permettent d'agencer le dispositif de protection 20 sur le rebord supérieur 12 du corps 3.

Conformément à la figure 1, le bec verseur 5 est agencé de manière diamétralement opposée à l'ouverture d'entrée 11. Le corps 3 comporte des ouvertures traversantes 13 vers le bec verseur 5 et les ouvertures traversantes 13 sont agencées pour être sous la surface de l'eau au niveau de remplissage maximum.

En fonctionnement, l'utilisateur qui veut chauffer une grande quantité d'eau, remplit la bouilloire 1 au niveau de remplissage maximum et met la bouilloire 1 en marche. Le fond chauffant 8 va échauffer l'eau contenue dans le corps 3 et, à mesure que l'on s'approche de l'ébullition, des flux ascendants d'eau et de vapeur vont être générés depuis le fond chauffant 8 vers la surface libre de l'eau. Les flux ascendants d'eau et de vapeur à l'aplomb du dispositif de protection 20 vont être fractionnés en deux parties. Une première partie va pénétrer par l'ouverture 23 et va s'enrouler le long de la face interne 27 pour ressortir par les ouvertures latérales 26a, 26b, tangentiellement au bord interne 9 et par les perforations 29 vers l'intérieur du corps 3. Les perforations 29 permettent surtout de fractionner et de laisser s'échapper vers le haut les bulles de vapeur contenues dans les flux ascendants. Une seconde partie va être déviée par la face externe 28 de la paroi 21 ainsi que par les protubérances 30 vers l'intérieur du corps 3. La vapeur générée par l'ébullition va s'accumuler au-dessus du niveau de l'eau puis passer dans le conduit vapeur 10, par l'ouverture d'entrée 11, pour atteindre le capteur de détection vapeur qui va déclencher l'arrêt du fond chauffant 8. Le dispositif de protection 20 permet de réduire les turbulences de la surface de l'eau ainsi que les projections aux abords de l'ouverture d'entrée 11 du conduit vapeur 10 pour éviter l'introduction d'eau dans l'ouverture d'entrée 11 pendant le temps nécessaire pour produire suffisamment de vapeur et déclencher l'arrêt du fond chauffant 8. Un tel dispositif de protection 20 permet de réduire le volume d'air au-dessus de la surface libre de l'eau à 20% du volume total de la bouilloire.

Dans une variante de réalisation du dispositif de protection 20 illustrée à la figure 4, la paroi 21 s'étend davantage verticalement au bord interne 9 que radialement dans un plan de coupe vertical, transversal au bord interne 9. Le dispositif de protection 20 de cette variante de réalisation est agencé dans la bouilloire 1 de manière similaire au dispositif de protection 20 du mode de réalisation illustré à la figure 1.

En fonctionnement, une partie des flux ascendants d'eau et de vapeur, à l'aplomb du dispositif de protection 20, vont être très tôt déviés vers l'avant, à l'opposé du bord interne 9 et de l'ouverture d'entrée, par la face externe 28 de la paroi 21 pour créer une zone calme à la surface de l'eau, à l'avant de la paroi 21.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention telle que définie dans les revendications.

## Revendications

1. Bouilloire (1) comprenant un corps (3) agencé au-dessus d'un fond chauffant (8) électrique et un conduit vapeur (10) destiné à convoyer la vapeur dégagée lors de l'ébullition vers un capteur de détection de vapeur, ledit conduit de vapeur (10) comportant une ouverture d'entrée (11), ladite bouilloire comportant un dispositif de protection (20) contre l'intrusion de l'eau dans le conduit vapeur lors de l'ébullition qui comprend une paroi (21) présentant dans un plan de coupe vertical, transversal au bord interne (9) du corps sur lequel est agencé l'ouverture d'entrée (11), une forme de boucle ouverte, courbée vers le bas, ladite paroi (21) s'étendant de manière transversale aux flux ascendants d'eau et de vapeur pour, au moins partiellement, bloquer et dévier les flux ascendants d'eau et de vapeur lors de l'ébullition et ainsi les écarter de l'ouverture d'entrée (11), **caractérisée en ce que** l'ouverture d'entrée (11) est agencée sur un bord interne (9) du corps (3) et **en ce que** la paroi s'étend sous l'ouverture d'entrée, depuis le bord interne du corps sur lequel est agencée l'ouverture d'entrée pour former une barrière aux flux ascendants d'eau et de vapeur qui progressent depuis le fond chauffant le long du bord interne et ainsi les écarter de l'ouverture d'entrée.

2. Bouilloire (1) selon la revendication 1, **caractérisée en ce que** la paroi (21) s'étend depuis le bord interne (9) selon une ligne (24) contenue dans un plan horizontal.

3. Bouilloire (1) selon la revendication 2, **caractérisée en ce que** la ligne (24) est contenue dans le plan horizontal (15) correspondant au niveau de remplissage maximum.

4. Bouilloire (1) selon l'une quelconque des revendications 1 à 3, **caractérisée en ce que** la paroi (21) présente une extrémité libre (22) et **en ce que**, dans un plan de coupe vertical, transversal au bord interne (9), l'extrémité libre (22) est orientée vers le bord interne (9) pour définir une ouverture (23) entre le bord interne (9) et ladite extrémité libre (22).

5. Bouilloire (1) selon l'une quelconque des revendications 1 à 4, **caractérisée en ce que** la paroi (21) présente une extrémité libre (22) et **en ce que**, dans un plan de coupe vertical, transversal au bord interne (9), l'extrémité libre (22) est située à égale distance du bord interne (9).

6. Bouilloire (1) selon l'une quelconque des revendications 1 à 5, **caractérisée en ce que** la paroi (21) présente dans un plan de coupe vertical, transversal au bord interne (9) une forme circulaire munie d'une ouverture (23).

7. Bouilloire (1) selon l'une quelconque des revendications 1 à 5, **caractérisée en ce que**, dans un plan de coupe vertical, transversal au bord interne (9), la paroi (21) s'étend davantage verticalement au bord interne (9) que radialement.

8. Bouilloire (1) selon l'une quelconque des revendications 1 à 7, **caractérisée en ce que** le corps (3) présente une section transversale circulaire de rayon R et la paroi (21) s'inscrit dans un secteur angulaire formé par deux rayons R et un arc de cercle, l'ouverture d'entrée (11) étant agencée à proximité du milieu de l'arc de cercle.

9. Bouilloire (1) selon l'une quelconque des revendications 1 à 8, **caractérisée en ce que** la paroi (21) comporte des perforations (29), notamment des perforations (29) oblongues.

10. Bouilloire (1) selon l'une quelconque des revendications 1 à 9, **caractérisée en ce qu'**elle comporte un couvercle (40) et **en ce que** la paroi (21) est agencée sous ledit couvercle (40).

11. Bouilloire (1) selon l'une quelconque des revendications 1 à 10, **caractérisée en ce qu'**elle comporte un bec verseur (5) agencé de manière diamétralement opposée à l'ouverture d'entrée (11) et **en ce que** la paroi (21) dévie les flux ascendants d'eau et de vapeur lors de l'ébullition vers le bec verseur (5).

12. Bouilloire (1) selon la revendication 11, **caractérisée en ce que** le corps (3) comporte une ouverture traversante (13) vers le bec verseur (5) et **en ce que** l'ouverture traversante (13) est agencée sous la surface de l'eau au niveau de remplissage maximum.

## Patentansprüche

1. Wasserkocher (1), umfassend einen über einem elektrischen Heizboden (8) angeordneten Körper (3) und eine Dampfleitung (10), die dazu bestimmt ist, Dampf, der während des Siedens freigesetzt wird, zu einem Dampferfassungssensor zu fördern, wobei die Dampfleitung (10) eine Eintrittsöffnung (11) aufweist, wobei der Kessel eine Schutzvorrichtung (20) gegen das Eindringen des Wassers in die Dampfleitung während des Siedens umfasst, die eine Wand (21) aufweist, die in einer vertikalen Schnittebene quer zur Innenkante (9) des Körpers, auf dem die Einlassöffnung (11) angeordnet ist, eine Form mit offener Schleife aufweist, die nach unten gekrümmt ist, wobei sich die Wand (21) quer zu den Aufwärtsströmungen von Wasser und Dampf erstreckt, um mindestens teilweise die Aufwärtsströmungen von Wasser und Dampf während des Siedens zu blockieren und umzulenken und sie somit von der Einlassöffnung (11) zu entfernen, **dadurch gekennzeichnet, dass** die Einlassöffnung (11) auf der Innenkante (9) des Körpers (3) angeordnet ist, und dass sich die Wand unter der Einlassöffnung von der Innenkante des Körpers erstreckt, auf dem die Einlassöffnung angeordnet ist, um eine Schranke gegen die Aufwärtsströmungen von Wasser und Dampf zu bilden, die von dem Heizboden entlang der Innenkante aufsteigen und sie somit von der Einlassöffnung zu entfernen.

2. Wasserkocher (1) nach Anspruch 1, **dadurch gekennzeichnet, dass** sich die Wand (21) von der Innenkante (9) entlang einer Linie (24) erstreckt, die in einer horizontalen Ebene enthalten ist.

3. Wasserkocher (1) nach Anspruch 2, **dadurch gekennzeichnet, dass** die Leitung (24) in der horizontalen Ebene (15) enthalten ist, die dem maximalen Füllstand entspricht.

4. Wasserkocher (1) nach einem der Ansprüche 1 bis 3, **dadurch gekennzeichnet, dass** die Wand (21) ein freies Ende (22) aufweist, und dass das freie Ende (22) in einer vertikalen Schnittebene quer zu der Innenkante (9) zu der Innenkante (9) ausgerichtet ist, um eine Öffnung (23) zwischen der Innenkante (9) und dem freien Ende (22) zu definieren.

5. Wasserkocher (1) nach einem der Ansprüche 1 bis 4, **dadurch gekennzeichnet, dass** die Wand (21) ein freies Ende (22) aufweist, und dass sich in einer vertikalen Schnittebene quer zur Innenkante (9) das freie Ende (22) im gleichen Abstand von der Innenkante (9) befindet.

6. Wasserkocher (1) nach einem der Ansprüche 1 bis 5, **dadurch gekennzeichnet, dass** die Wand (21) in einer vertikalen Schnittebene quer zur Innenkante (9) eine mit einer Öffnung (23) versehene Kreisform aufweist.

7. Wasserkocher (1) nach einem der Ansprüche 1 bis 5, **dadurch gekennzeichnet, dass** sich die Wand (21) in einer vertikalen Schnittebene quer zu der Innenkante (9) eher senkrecht zur Innenkante (9) als radial erstreckt.

8. Wasserkocher (1) nach einem der Ansprüche 1 bis 7, **dadurch gekennzeichnet, dass** der Körper (3) einen kreisförmigen Querschnitt mit dem Radius R aufweist, und dass die Wand (21) in einem Winkelsektor aufgenommen ist, der von zwei Strahlen R und einem Kreisbogen gebildet ist, wobei die Einlassöffnung (11) nahe der Mitte des Kreisbogens angeordnet ist.

9. Wasserkocher (1) nach einem der Ansprüche 1 bis 8, **dadurch gekennzeichnet, dass** die Wand (21) Perforationen (29), insbesondere längliche Perforationen (29), aufweist.

10. Wasserkocher (1) nach einem der Ansprüche 1 bis 9, **dadurch gekennzeichnet, dass** er eine Abdeckung (40) aufweist, und dass die Wand (21) unter der Abdeckung (40) angeordnet ist.

11. Wasserkocher (1) nach einem der Ansprüche 1 bis 10, **dadurch gekennzeichnet, dass** er eine Ausgusstülle (5) aufweist, die diametral gegenüber der Einlassöffnung (11) angeordnet ist, und dass die Wand (21) den Aufwärtsstrom von Wasser und Dampf während des Siedens zu der Ausgusstülle (5) umlenkt.

12. Wasserkocher (1) nach Anspruch 11, **dadurch gekennzeichnet, dass** der Körper (3) eine Durchgangsöffnung (13) zu der Ausgusstülle (5) hin aufweist, und dass die Durchgangsöffnung (13) unter der Wasseroberfläche bei maximaler Füllhöhe angeordnet ist.

## Claims

1. Kettle (1) comprising a body (3) arranged above an electrical heating base (8) and a steam pipe (10) intended to convey the steam released during boiling to a steam-detection sensor, said steam pipe (10) comprising an inlet opening (11), said kettle comprising a protection device (20) against the entry of water into the steam pipe during boiling, which comprises a wall (21) having, in a vertical cutting plane, transverse to the inner edge (9) of the body on which the inlet opening (11) is arranged, an open loop shape, curved downwards, said wall (21) extending transversely to the rising flows of water and steam in order, at least partially, to block and divert the rising flows of water and steam during boiling and thus to remove them from the inlet opening (11), **characterised in that** the inlet opening (11) is arranged on an inner edge (9) of the body (3) and **in that** the wall extends under the inlet opening, from the inner edge of the body on which the inlet opening is arranged, in order to form a barrier to the rising flows of water and steam that progress from the heating base along the inner edge and thus remove them from the inlet opening.

2. Kettle (1) according to claim 1, **characterised in that** the wall (21) extends from the inner edge (9) along a line (24) contained in a horizontal plane.

3. Kettle (1) according to claim 2, **characterised in that** the line (24) is contained in the horizontal plane (15) corresponding to the maximum filling level.

4. Kettle (1) according to any of claims 1 to 3, **characterised in that** the wall (21) has a free end (22) and **in that**, in a vertical cutting plane, transverse to the inner edge (9), the free end (22) is oriented towards the inner edge (9) in order to define an opening (23) between the inner edge (9) and said free end (22).

5. Kettle (1) according to any of claims 1 to 4, **characterised in that** the wall (21) has a free end (22) and **in that**, in a vertical cutting plane, transverse to the inner edge (9), the free end (22) is situated at equal distances from the inner edge (9).

6. Kettle (1) according to any of claims 1 to 5, **characterised in that** the wall (21) has, in a vertical cutting plane, transverse to the inner edge (9), a circular shape provided with an opening (23).

7. Kettle (1) according to any of claims 1 to 5, **characterised in that**, in a vertical cutting plane, transverse to the inner edge (9), the wall (21) extends more vertically to the inner edge (9) than radially.

8. Kettle (1) according to any of claims 1 to 7, **characterised in that** the body (3) has a circular cross section of radius R and the wall (21) fits in an angular sector formed by two radii R and an arc of a circle, the inlet opening (11) being arranged in the vicinity of the middle of the arc of a circle.

9. Kettle (1) according to any of claims 1 to 8, **characterised in that** the wall (21) comprises perforations (29), in particular oblong perforations (29).

10. Kettle (1) according to any of claims 1 to 9, **characterised in that** it comprises a cover (40) and **in that** the wall (21) is arranged under said cover (40).

11. Kettle (1) according to any of claims 1 to 10, **characterised in that** it comprises a pouring spout (5) arranged diametrically opposite to the inlet opening (11) and **in that** the wall (21) diverts the rising flows of water and steam during boiling to the pouring spout (5).

12. Kettle (1) according to claim 11, **characterised in that** the body (3) comprises a through opening (13) to the pouring spout (5) and **in that** the through opening (13) is arranged under the surface of the water at the maximum filling level.
